# EUROPEAN PATENT APPLICATION

(11) **EP 2 138 471 A1**
(43) Date of publication of application: **30.12.2009**
(21) Application number: 08159007.7
(22) Date of filing: 25.06.2008
(51) Int. Cl.: C03C 25/10

(54) **Atomic layer deposition of hydrogen barrier coatings on optical fibers**

(71) Applicant: Acreo AB, 164 40 Kista (SE)
(72) Inventor: Norin, Lars, 824 42, HUDIKSVALL (SE); Soininen, Pekka, 00100, HELSINGFORS (FI); Putkonen, Matti, 02620, ESPOO (FI)
(74) Representative: Haag, Malina Anna

(57) **Abstract**

The present invention provides a method for the manufacture of an optical fiber (100; 200) with reduced susceptibility for hydrogen induced attenuation. The method comprises: providing an optical fiber comprising a drawn glass fiber (101, 102); and arranging, by means of Atomic Layer Deposition, a hydrogen barrier layer (104, 204) comprising at least one sublayer of an inorganic material on said optical fiber. The ALD-process provides an optical fiber with a very dense, essentially hole-free, hydrogen barrier layer on all sides of the enveloping surface of the fiber.

## Description

### Technical Field

The present invention relates to a method for the manufacture of an optical fiber, as well as an optical fiber and a reactor for use in the manufacture of such an optical fiber.

### Background Art

Optical fibers are conventionally used in light and data transfer for many types of application. Typically, an optical fiber consists of a glass fiber comprising a glass core jacketed by a glass cladding. The cladding generally has a lower refractive index than the core in order to achieve conditions for Total Internal Reflection in the fiber core. Not being limited to the following examples, the refractive index may exhibit a stepwise decrease from the core to the cladding, or may decrease in a gradual fashion.

The optical fiber further typically comprise one or more polymeric coatings arranged on the enveloping surface for adding mechanical stability to the glass fiber, which in it self is a rather brittle structure. These polymeric coatings does not influence the optical properties of the optical fiber.

In a conventional manufacturing method a large diameter preform with a precisely defined refractive index is placed in a drawing tower where the preform tip is heated and the optical fiber is pulled out as a string. By monitoring the resultant fiber width, the drawing rate on the drawn fiber can be controlled to obtain/maintain the desired fiber diameter.

The transmissivity of the optical fiber is an essential property of the fiber. Losses due to absorption/scattering in the fiber is advantageously avoided for reducing the need for optical amplifiers along the extension of the fiber. Hence, in typical applications, an optical fiber is manufactured from high purity glass, for example a silicon-germanium based glass material.

One problem with conventional optical fibers is however the phenomenon known as Hydrogen Induced Attenuation. Hydrogen Induced Attenuation results in a loss of optical strength of the signal in the fiber. This is, in part, due to the diffusion of hydrogen into the glass fiber structure. Hydrogen atoms bond to any open or weak bonds in the glass structure, such as to certain germanium atoms in the vicinity of germanium-oxygen deficient centers or to form SiOH and/or GeOH. For germanium doped fibers, the attenuation increases rapidly with increases in temperature.

This decreases the usability of optical fibers in harsh environments of increased temperatures and/or high hydrogen concentration.

WO 02/100788 to Draka Fiber Technology N.V. describes the use of Chemical Vapour Deposition (CVD) to arrange, on the inside of a substrate tube, one or more layers of glass at a stoichiometric excess of oxygen, to form a preform from which an optical fiber can be drawn. The optical fiber allegedly has a low sensitivity to hydrogen induced attenuation.

However, the approach in WO 02/011788 is very limited in terms of materials for use as the hydrogen barrier layer, and is not possible to perform on a already manufactured fiber.

US 6,029,476 to Bourhis et. al. describes a method and a reactor for manufacturing a coated optical fiber by applying the coating by means of chemical vapour deposition (CVD).

However, the CVD coating method of US 6, 029,476 requires the surface of the fiber to have a high surface temperature of about 1000 °C. Hence, it is not possible to utilize this method on an already manufactured optical fiber that also has the conventional polymeric coating arranged to protect the glass fiber from mechanical damage.

Hence, there is a need in the art for improved optical fibers that are less susceptible to Hydrogen Induced Attenuation, and for methods and means for the manufacturing of such optical fibers,

### Summary of the Invention

It is an object of the present invention to at least partly overcome the problems of the prior art and to provide an optical fiber with reduced susceptibility to hydrogen induced attenuation as well as methods and means for the manufacture of such optical fibers.

One further object is to provide an essentially hermetic, in relation to hydrogen diffusion, optical fiber and means and methods for the manufacture of such an hermetic optical fiber.

It is also an object of the present invention to provide methods and means for providing an optical fiber with a hydrogen barrier layer, which layer can be arranged on a pre-manufactured fiber.

The present inventors have found that the method of Atomic Layer Deposition (ALD) advantageously can be used to deposit hydrogen barrier layers on the optical fibers.

ALD is a self-limiting, sequential surface chemistry that deposits conformal thin-films of materials onto substrates of varying compositions. ALD is similar in chemistry to chemical vapor deposition (CVD), except that the ALD reaction breaks the CVD reaction into two half-reactions, keeping the precursor materials separate during the reaction. ALD film growth is self-limited and based on surface reactions, which makes atomic scale deposition control possible. By keeping the precursors separate throughout the coating process, atomic layer control of film grown can be obtained as fine as ∼0.1 angstroms (Å) per monolayer.

ALD has unique advantages over other thin film deposition techniques, as ALD grown films are conformal, essentially pin-hole free, and chemically bonded to the substrate. Due to that ALD is performed in gaseous phase, it is possible to deposit coatings perfectly uniform in thickness inside deep trenches, porous media and around particles.

A review of ALD, formerly also known as ALE (Atomic Layer Epitaxy) is e.g. found in Ritala, M and Leskelä M, Nanotechnology 10 (1999), 19-24 "Atomic Layer Epitaxy - a valuable tool for nanotechnology?", which is hereby incorporated by reference.

Further, ALD is possible to perform at rather mild environmental conditions, such as a rather low temperature, which enables the method to be utilized on the enveloping surface of a polymeric or resin based outer coating.

Hence, in a first aspect, the present invention relates to a method for the manufacture of an optical fiber optical fiber with reduced susceptibility for hydrogen induced attenuation, comprising
- providing an optical fiber having a drawn glass fiber part; and
- arranging, by means of Atomic Layer Deposition, a hydrogen barrier layer comprising at least one sublayer of an inorganic material on said optical fiber

The Atomic Layer Deposition (ALD) approach is advantageous when it comes to deposit hydrogen barrier layers on an optical fiber. ALD provides an essentially completely surface-covering layer which is uniform in thickness. Further, the ALD process provides a layer on each part of the substrate that is exposed to the ALD gases in the reaction steps. Hence, there is no "shadowing effect" since the ALD reaction is performed on the whole surface exposed to the ALD reactants.

Another advantage of the ALD method is that each layer is very thin, forming essentially a single molecular or atomic layer per cycle, depending on the ALD reactants. On the other hand, each layer essentially totally covers the exposed surface. This gives a "digital" formation of the layers on the surface, with homogenous thickness, essentially not depending on the surface topography.

As used herein "a hydrogen barrier layer comprising at least one sublayer of an inorganic material" refers to both a hydrogen barrier layer comprising only one layer, which in such a case consists of a inorganic material, and to a hydrogen barrier layer consisting of a plurality of sublayers, of which at least one sub layer is of an inorganic material.

As a result, ALD provides the optical fiber with a very dense, essentially hole-free, barrier layer on all sides of the enveloping surface of the fiber.

In a first embodiment, the optical fiber is provided with a polymeric coating layer arranged jacketing the enveloping surface of glass fiber, and the hydrogen barrier layer is arranged on the enveloping surface of the coating layer.

By using the ALD method, an already drawn fiber (any optical fiber) can be provided with a hermetic H₂-barrier in a post-production process. The coating material is needed in order to practically handle a fiber. One uniqueness of the ALD process is that is can be performed at low temperatures, typically below about 150°C such as in the range of about 100°C to about 150°C) so that that barrier deposition on top of the polymeric coating is possible without detrimental influence on the coating material.

In a second embodiment, the optical fiber is provided directly on the enveloping surface of the drawn glass fiber of the optical fiber. Such a fiber may thereafter optionally be provided with a coating layer. In a method according to this second embodiment, the drawn glass fiber may be provided with an intermediate coating which thereafter is stripped away from said intermediate coating before depositing said hydrogen barrier layer on said glass fiber.

It is also contemplated to arrange a first hydrogen barrier layer directly on the enveloping surface of the drawn glass fiber, and a second hydrogen barrier layer on the enveloping surface of a coating layer arranged on the enveloping surface of the first hydrogen barrier layer, where at least one of the first and the second hydrogen barrier layers is deposited by means of ALD.

The glass fiber part of the optical fiber is typically from a SiO₂ based glass material, so in order to provide additional hydrogen diffusion barrier, the hydrogen barrier layer has a hydrogen permeability that is lower than that of SiO₂.

The hydrogen induced attenuation for an SiO₂-based glass fiber can for example be analyzed as the attenuation (in dB/km) at 1240 nm after a significant exposure time to a hydrogen atmosphere. Hence, the barrier effect of a hydrogen barrier layer may be evaluated in terms of the increase of attenuation at 1240 nm, where a low increase after exposure indicates high barrier effect.

It should be noted that WO 2007/147946 to Beneq OY mentions the use of ALD-technology in connection to optical fibers. However, the method presented in WO 2007/147946 does not relate to deposition of hydrogen barrier layers on the fiber and is performed on the fiber preform, not on the drawn fiber as is the case in the present invention.

In embodiments of the invention, the hydrogen barrier layer comprises a homogenous multilayer structure, where at least one sublayer is of said inorganic material. The homogenous multilayer structure comprises of a plurality of sublayers which all are of the same material, such as deposited using the same ALD-precursor compounds.

In embodiments of the present invention, the hydrogen barrier layer comprises a heterogeneous multilayer structure, where at least one sublayer is of said inorganic material. The heterogeneous multilayer structure comprises a plurality of sublayers of different materials, such as two or more materials in an alternating fashion.

Typically, such heterogeneous multilayer structure comprises at least a first sublayer of a first inorganic material and at least a second sublayer of a second inorganic material or a polymeric material.

By using different materials in different sublayers, the properties of the hydrogen barrier layer can be tailored to the desired properties. For example using two different inorganic materials can prevent pinhole formation from progressing throughout the hydrogen barrier layer.

Introduction of polymeric layers in the heterogeneous multilayer structure may be used to increase the flexibility of the hydrogen barrier layer, in the end preventing the hydrogen barrier layer from cracking.

Oxides, nitrides, oxynitrides, sulphides, fluorides, carbides and metals are amongst those inorganic materials suitable for use in the hydrogen barrier layer.

In embodiments of the present invention the hydrogen barrier layer is deposited to a thickness of from about 0.1 nm to about 5 µm, such as from about 1 to about 200 nm, for example from about 10 to about 100 nm.

The thickness of the hydrogen barrier layer will depend on the application of the fiber, and will be determined in order to achieve e.g. the optimum balance between flexibility and impermeability.

In embodiments of the present invention, at least a second layer may be covalently attached to said hydrogen barrier layer.

The ALD-deposited hydrogen barrier layer may form a good substrate surface for additional coating steps, such as electro plating, chemical bath deposition, freeze-coating of metals, PVD-methods or CVD-methods.

In a second aspect, the present invention relates to an optical fiber comprising at least a glass fiber and a polymeric coating layer jacketing said glass fiber, further comprising a hydrogen barrier layer of an inorganic material arranged on and bound to the enveloping surface of said polymeric coating.

Alternatively, the second aspect of the invention relates to an optical fiber, comprising at least a glass fiber and a hydrogen barrier layer, comprising at least one sublayer of an inorganic material, arranged on and bound to the enveloping surface of said glass fiber, and optionally a polymeric coating jacketing the enveloping surface of said hydrogen barrier layer.

In a third aspect, the present invention relates to a reactor for in-line deposition of a hydrogen barrier layer on an optical fiber by means of Atomic Layer Deposition, comprising:
- means for advancing said an optical fiber in relation to said reactor;
- means for exposing said fiber to a first atmosphere comprising a saturating gaseous composition of a first precursor compound, which is reactive to reactive groups on the surface to be coated, arranged in a first position along the advancement direction of said optical fiber; and
- means for exposing said fiber, exposed to said first atmosphere, to a second atmosphere comprising a saturating gaseous composition of a second precursor compound reactive to reactive groups of said first precursor compound, arranged in a second position, located downstream of said first position along said advancement direction.

It is further noticed that the present invention relates to all possible combinations of the claims.

These and more aspects of the present invention will be apparent from the following description of the invention and the appended drawings.

### Brief Description of the Drawings

It should be noted that the appended drawings are not necessarily drawn to scale and that the dimension of some features may be exaggerated in respect to the dimension of other features in the same drawing.
Figure 1 illustrates, in cross-sectional view, a first embodiment of an optical fiber of the present invention.
Figure 2 illustrates, in cross-sectional view a second embodiment of an optical fiber of the present invention.
Figure 3 illustrates schematically a first embodiment of an ALD-deposited barrier layer.
Figure 4 illustrates schematically a second embodiment of an ALD-deposited barrier layer.
Figure 5 illustrates schematically one embodiment of an in-line ALD reactor for deposition of barrier layers.
Figure 6 illustrates schematically another embodiment of an in-line ALD reactor for deposition of barrier layers
Figure 7 displays experimental results on hydrogen induced attenuation for a reference fiber before (dashed line) and after (solid line) 12 days of exposure to 1 atm. H₂ at 21 °C.
Figure 8 displays experimental results on hydrogen induced attenuation for a Al₂O₃-ALD-treated fiber before (dashed line) and after (solid line) 12 days of exposure to 1 atm. H₂ at 21 °C.

### Detailed Description

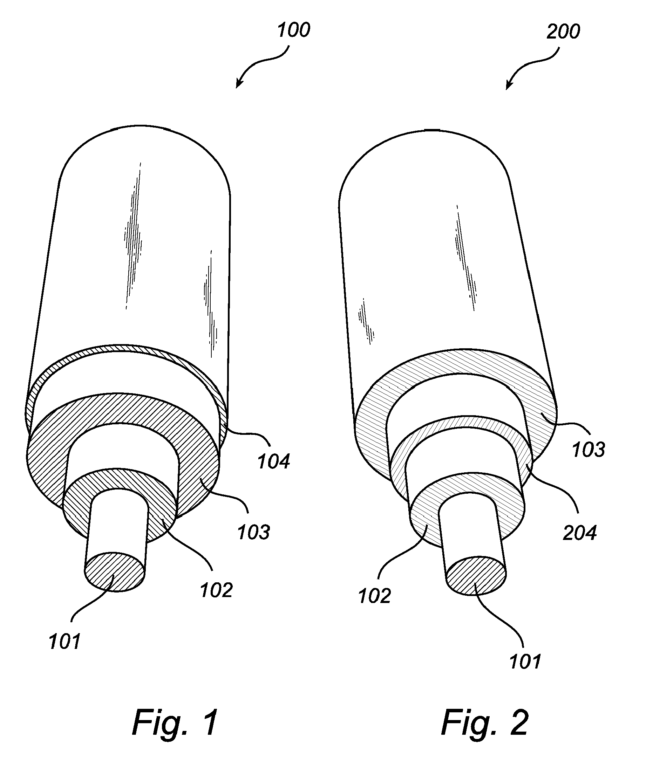

A first embodiment of an optical fiber according to the present invention and obtainable by a method of the present invention is illustrated in figure 1.

The optical fiber 100 according to this embodiment comprises a glass fiber part 101, 102 comprising a core 101 and cladding 102. As is conventional, the core 101 has a higher refractive index than the cladding 102 so as to allow total internal reflection (TIR) in the core 101 of the fiber.

The glass fiber part, i.e. the core and the cladding 101, 102 typically has a diameter in the range of from 80-2000 µm

The glass fiber part is covered by a coating layer 103 made of a polymeric material, such as, but not limited to acrylate, polyimide, silicone, and other materials known to those skilled in the art as suitable as coating layer materials.

The coating layer 103 protects the glass surface of the optical fiber from scratches and particles that otherwise would have a detrimental effect on the mechanical strength of the fiber.

A hydrogen barrier layer 104 is deposited by means of ALD on the enveloping surface of the coating layer 103. Due to the nature of the ALD deposition method, the barrier layer 104 is firmly bonded to the coating layer 103.

The hydrogen barrier layer 104 may exist in many different forms and will be described more in detail below.

Due to that the hydrogen barrier layer 104 is deposited by means of ALD, it is essentially uniform in terms of thickness around the circumference of the optical fiber and is essentially pin-hole free.

Further, due to the nature of the ALD-deposition method, the barrier layer 104 is a very dense material, having good properties in terms of acting as a hydrogen barrier layer.

It is further typically deposited an outer cover layer, such as a polymeric cover layer, for example an acrylate or polyimide layer outside the hydrogen barrier layer 104, in order to protect the hydrogen barrier layer from e.g. physical wear and scratches.

A second embodiment of an optical fiber according to the present invention or obtainable by a method of the present invention is schematically illustrated in figure 2 where a hydrogen barrier layer 204 is arranged, by means of ALD, on the enveloping surface of the glass fiber part (i.e. on the enveloping surface of the cladding 102) instead as on the enveloping surface of the coating layer 103.

It should be noted that an optical fiber having a first barrier layer arranged on the enveloping surface of the glass fiber and a second barrier layer arranged on the enveloping surface of the coating layer is also contemplated and covered by the scope of the present invention.

In general, an optical fiber is manufactured by melting the tip of a large diameter fiber preform in a furnace and drawing a small diameter glass fiber from this preform. The preform has a carefully designed refractive index profile, and this profile is transferred to the drawn fiber.

After drawing the glass fiber, is provided with coating layer(s) and optionally also a sturdy jacket, where after the finalized fiber is collected, typically on a roll. This method is conventional and well known to those skilled in the art

The ALD-deposition of the hydrogen barrier layer 104 may be performed in-line at any stage of this manufacturing by letting the optical fiber continuously pass through a reactor adapted for continuous ALD-deposition.

Alternatively, the ALD deposition of the hydrogen barrier layer 104 may be performed off-line, batch-wise, by placing a certain length of the fiber in a closed ALD reactor and performing the ALD reaction on that length of fiber in one batch reaction.

In general, an ALD process starts with the step of providing a substrate surface on which the ALD is to be performed in an ALD reactor.

The steps of an ALD cycle is typically the following:
(a) exposing said optical fiber to a first atmosphere comprising a saturating gaseous composition comprising a first ALD precursor compound reactive with reactive groups on the surface to be coated;
(b) reacting said first precursor compound with said reactive groups on the surface to be coated;
(c) exposing the fiber from step (b) to a second atmosphere comprising a saturating gaseous composition comprising a second precursor compound reactive with reactive groups of the first precursor compound (b);
(d) reacting said second precursor compound with said reactive groups of said first precursor compound; and
(e) optionally repeating steps (a) to (d) one or more additional times.

The substrate surface is exposed to a first atmosphere comprising a gaseous, saturating amount of the precursor compound A and the precursor compound A is allowed to react with the substrate surface.

As used herein, the term "saturating amount" or "saturating concentration" refers to that the concentration/amount of a certain precursor compound is enough to saturate essentially all the reactive sites on a substrate to be coated, to which chemical groups the precursor compound is targeted.

After having allowed precursor compound A to essentially saturate the substrate surface, any excess of A is removed from the reactor, typically by purging the reactor with an inert gas, such as N₂ or by evacuating.

Thereafter, the substrate is exposed to a second atmosphere comprising a gaseous, saturating amount of a precursor compound B. The precursor compound B is capable of reacting with the precursor compound A, to essentially saturate the chemical groups on the precursor compound A. Further, the reaction between A and B results in chemical groups which are reactive to following precursors.

The substrate is consequently allowed to react with precursor compound B, resulting in chemical groups which are reactive with the precursor compound A.

Excess of B is removed from the reactor, typically by purging the reactor with a inert gas, such as N₂ or by evacuating and then the cyclic method can be repeated.

When repeating the method, the precursor compounds can be the same or may be different, depending on whether a homogenous, single-material coating, or a heterogeneous, multi-material coating is desired.

For each cycle a new molecular layer is formed on the substrate in a "digital" manner of one cycle - one layer.

One combination of precursors A and B, provided for illustrative purposes only, is trimethyl-aluminum, Al(CH₃)₃ as precursor A and water, H₂O as precursor. The trimethyl-aluminum is reactive to hydroxyl groups on the substrate, which of example is abundantly present on glass surfaces.

Precursor A reacts with the hydroxyl groups resulting in free methanol and substrate bound Aluminum atoms with one or two methyl groups still attached.

Precursor B (water) reacts with the remaining methyl groups, converting these into hydroxyl groups attached to the aluminum atoms and free methane.

The result will in this case be an Al₂O₃-layer.

It is to be noted that the above general description of the ALD process steps applies to steady-state deposition, after having performed the first few ALD cycles. When applying the ALD process on a polymeric substrate, it will, due to the porous nature of the polymer surface, take several ALD-cycles until a fully surface-covering ALD-deposited layer is obtained.

One object of the present invention is to provide, by means of ALD, an optical fiber 100; 200 with at least one hydrogen barrier layer 104.

Typically, the hydrogen barrier layer 104 is deposited to a thickness of from about 10 to about 100 nm, but also barrier layers with higher thickness, such as above 100 nm, for example about 1-5 µm are contemplated. Materials suitable for forming such hydrogen barrier layer 104 include, but are not limited to, ALD-deposited layer of inorganic materials, such as metal oxides, e.g. Al₂O₃, TiO₂, ZrO₂, SiO₂, AlSiOₓ, nitrides, e.g. AIN, BN, TiN, WₓN, Si₃N₄, oxynitrides, such as SiON, sulfides, e.g. ZnS, CaS, fluorides, e.g. ZnF₂, SrF₂, carbides, e.g. SiC and TiC, and metals, e.g. Pt, Ir, Pd.

Preferred materials amongst these inorganic barrier materials include Al₂O₃, SiO₂, AlSiOx, and TiO₂.

ALD-precursors for obtaining the above inorganic materials are known to those skilled in the art, and could be synthesized by standard methods or are commercially available, i.e. from Sigma Aldrich, St Louis, MI, USA, and other suppliers.

The above-mentioned materials may further be combined with polymeric materials or organic/inorganic hybrid materials.

The ALD reactions can take place at relatively mild conditions, in the temperature range of about 100-150°C. Hence, ALD can be used to provide an inorganic, e.g. ceramic, coating on a polymeric substrate, such as the coating layer 103, at temperatures which are not detrimental to the polymeric substrate.

For some applications, e.g. where the optical fiber may be introduced into a living body, such as e.g. an optical fiber for endoscopic, gastroscopic or key hole surgery use, it may be advantageous that the hydrogen barrier layer is made of, or has an outer surface of, a biocompatible material, such as TiO₂.

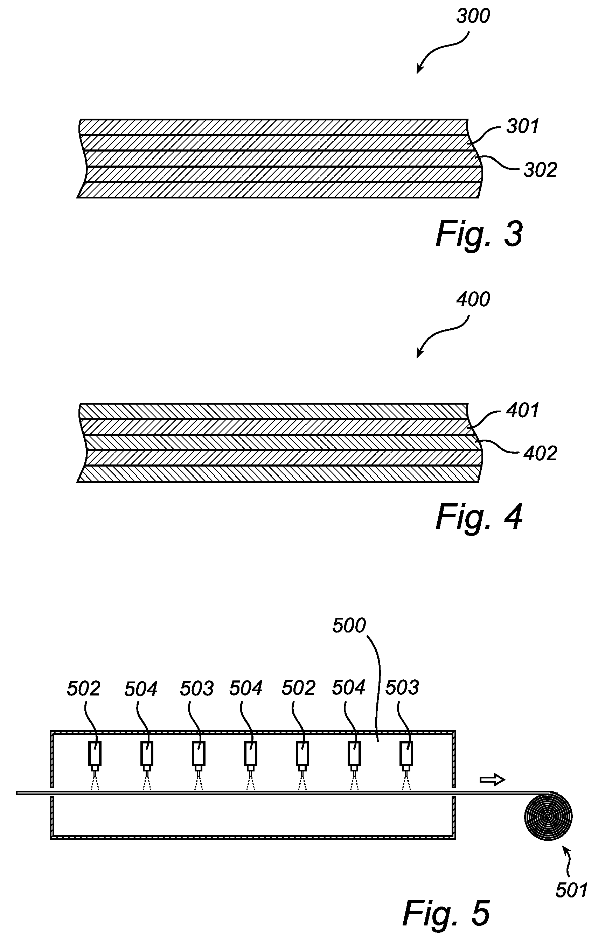

The hydrogen barrier layer 104 is typically a multilayer structure formed by means of a plurality of ALD cycles. For example, and as is illustrated in figure 3, the hydrogen barrier layer 104 may comprise a homogenous multilayer structure 300, formed by several ALD-cycles using the same precursor compounds for each cycle. Each sub-layer 301, 302 of the multilayer structure 300 has essentially the same composition, and each sublayer 301, 302 is bonded to the underlying sublayer (or to the fiber surface for the first sublayer).

Materials that are especially contemplated for use in a hydrogen barrier layer of a homogenous multilayer structure includes, but are not limited to the above-mentioned inorganic materials.

Especially, a multilayer of Al₂O₃(about 10 to about 100 nm thick, corresponding to about 90 to about 900 ALD cycles) has shown promising results as hydrogen barrier layer 104.

An Al₂O₃ hydrogen barrier layer may e.g. be obtained using tri-methyl aluminum and water as ALD precursor compounds.

Further, the hydrogen barrier layer 104, may alternatively, as is illustrated in figure 4, comprise a heterogeneous multilayer structure 400, formed by multiple ALD cycles using different precursor compounds in at least some of the ALD-cycles. In such a heterogeneous multilayer structure, at least one pair of adjacent sublayers 401, 402 are different in respect of material composition. As a non-limiting example, the heterogeneous multilayer structure 400 may comprise alternating layers of material X and material Y in a X/Y/X/Y-manner.

For example, an alternating structure of (i) one of the above-mentioned inorganic materials, and (ii) a polymer, such as for example polyimide, polyamide, metal-hybrid polymers, such as alucones, are contemplated as hydrogen diffusion barriers. Also contemplated is an alternating structure of (i) a first of the above mentioned inorganic materials, (ii) a second of the above mentioned inorganic materials, and (iii) optionally additional of the above mentioned inorganic materials.

In one example, an alternating multilayer structure of Al₂O₃/polyimide/Al₂O₃/polyimide is used as a hydrogen diffusion barrier. Each sublayer in such a heterogeneous multilayer structure may be a sublayer obtained by one or more ALD-cycle deposition of the material.

The polymeric intermediate layers in the multilayer structure prevents cracking of the hermetic coating.

In another example, an alternating structure of three materials, such as Al₂O₃/SiO₂/polyimide/Al₂O₃/SiO₂/polyimide is utilized.

In yet another example, an alternating structure Al₂O₃/SiO₂/Al₂O₃/SiO₂ is utilized.

The ALD-method may also be used as a method for functionalizing the fiber surface so as to make the surface reactive for the purpose of arranging a barrier layer 104 by other methods than ALD, such as electro plating, chemical bath deposition, freeze-coating of metals, PVD-methods or CVD-methods.

For an example of this approach ALD may be used to deposit a very thin metallic seed layer on the fiber, which can serve as the conducting path in electro plating the fiber with thick films in a second step.

As discussed above, the barrier layer 104 may be deposited on the enveloping surface of the glass fiber i.e. on the outer surface of the core/cladding 101,102, or on the enveloping surface of the polymeric coating layer 103, or alternatively one such barrier layer may be present in each of the above mentioned positions.

The deposition of the barrier layer 104 may be performed as an essentially continuous, in-line reaction in an in-line ALD reactor. Such an in-line ALD-reactor is typically located at a suitable position along the fiber processing path between the preform-melting furnace and the fiber collection unit on which the finished fiber is collected.

An in-line ALD-method for depositing an hydrogen barrier layer comprises sequentially passing a fiber to be coated through:
(i) a first atmosphere comprising a saturating amount of a first ALD-precursor compound; and
(ii) a second atmosphere comprising a saturating amount of a second ALD-precursor compound; and optionally repeating (i) and (ii) one or more times.

When the barrier layer 104 is to be deposited on the enveloping surface of the polymeric coating layer 103, the in-line ALD reactor is suitably located downstream of the means for arranging the coating layer 103 on the glass fiber part and upstream of the fiber collection unit: However, it would also be possible to, as a post treatment, pass a finished and collected optical fiber through a separate in-line ALD reactor and thereafter to a second fiber collection unit.

When the barrier layer 104 is to be deposited directly on the glass fiber part, i.e. the enveloping surface of the cladding 102, the in-line ALD reactor is suitably located downstream of the preform melting furnace and upstream of the means for arranging the coating layer 103 on the fiber. However, it would also be possible to, as a post treatment, pass a finished and collected optical fiber through a cover layer stripping unit for removal of the cover layer, on to a separate in-line ALD reactor, a second means for arranging a cover layer on the (now ALD-treated) fiber and thereafter to a second fiber collection unit, optionally via further treatment steps.

An in-line, more or less continuous, ALD deposition method has the advantage that one stretch of the fiber is treated without the risk of any part of that stretch being in contact with another stretch of the fiber, thereby preventing the part in contact from being deposited by the material. Further an in-line ALD deposition method could be especially advantageous for ALD-deposition of layers directly on the glass fiber, since the ALD-treated fiber could thereafter be provided with an polymeric envelope. This reduces the risk of breaking/damaging the glass fiber in any handling steps accompanying an off-line deposition method. Also, the steps of applying an intermediate polymeric envelope and thereafter stripping the fiber of this intermediate envelope before treating the glass fiber with the ALD deposition method can be avoided.

The deposition of the barrier layer 104 on the optical fiber could be performed in a batch wise, off-line, manner in a closed ALD reactor.

Such an off-line method typically comprise:
- providing a fiber to be coated in a closed ALD reactor;
- performing said ALD deposition in said closed reactor; and
- removing said fiber from said ALD reactor.

When the barrier layer 104 is to be deposited on the enveloping surface of the coating layer 103, the optical fiber is collected downstream of the means for providing the optical fiber with a coating layer, and the collected fiber is put in a closed ALD reactor, whereafter the ALD deposition is performed and the fiber is taken out of the reactor for optional further processing.

When the barrier layer 104 is to be deposited directly on the glass fiber part, i.e. the enveloping surface of the cladding 102, the fiber may be collected upstream of the means for providing the optical fiber with a coating layer and put in the closed ALD-reactor, or may alternatively be collected downstream of a means for providing the optical fiber with an intermediate coating layer, whereafter the intermediate coating layer is stripped off, the stripped fiber put in the closed ALD-reactor. After the ALD-deposition is performed, the (now ALD-treated) fiber is provided with a final coating layer 103 and is optionally further processed before collection.

An off-line, batch-wise ALD deposition method has the advantage that a long length of fiber can be treated simultaneously. Since all the fiber is treated under the same conditions, the ALD-deposited layers will be essentially uniform along the length of the treated fiber.

An off-line, closed ALD-reactor for batch-wise ALD-processing of optical fibers typically has a chamber with inlets and outlets for reactant and purging gases. Further, the reactor comprises a fiber holder. The holder is suitably designed to be able to hold an as long stretch of fiber as possible with a minimum of contact points between the fiber and the holder.

One embodiment of an in-line ALD-reactor 500 for continuous ALD-processing of optical fibers is illustrated in figure 5 and comprises a means 501 for advancing said an optical fiber in relation to said reactor, such as a roll for winding up the fiber, and a set of one or more first nozzles 502 for exposing said fiber to a first atmosphere comprising a saturating gaseous concentration of a first precursor compound, which is reactive to reactive groups on the surface to be coated, arranged distributed along the advancement direction of said optical fiber; and a set of one or more second nozzles 503 for exposing said fiber, exposed to said first atmosphere, to a second atmosphere comprising a saturating gaseous concentration of a second precursor compound reactive to reactive groups of said first precursor compound, arranged with one such second nozzle 503 between each pair of first nozzles.

The reactor may further comprise means 504, such as nozzles or draining valves, for clearing the reactor compartment of excess reactants. Such clearing means 504 may advantageously be placed in between, along the advancement direction, neighboring nozzles 502 for exposing said fiber to the first atmosphere and nozzles 503 for exposing said fiber to said second atmosphere.

The fiber is passed through the reactor 500 and is therein alternatingly exposed to the first and the second atmophere under conditions allowing the ALD-reactions to occur.

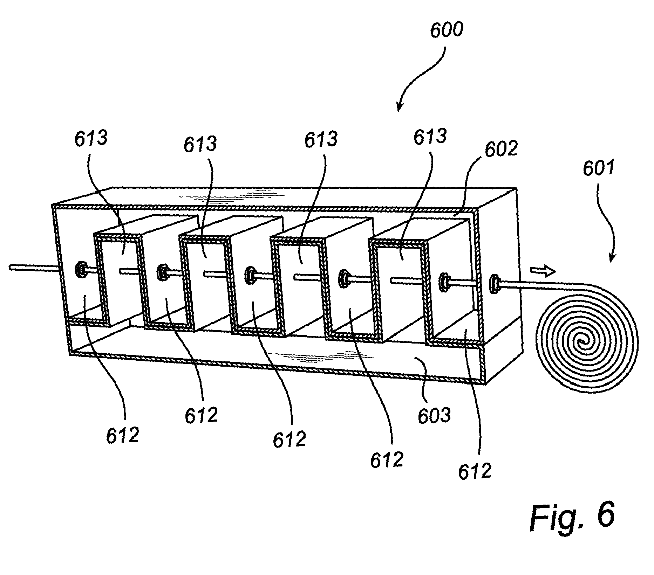

A second embodiment of an in-line ALD reactor is illustrated in figure 6 and comprises, in addition to a fiber advancing means 601, two separate chambers 602 and 603, containing a saturating concentration of a gaseous first precursor compound and a saturating concentration of the gaseous second precursor respectively. The optical fiber is passed through the chambers, and the second chamber 603 is arranged downstream of the first chamber 602. The fiber is advantageously made to pass through each of the chambers several times in an alternating fashion, and this can, for example, be accomplished by adding several such reactors 600 in series, or/and by designing each of the first and second chambers 602 and 603 to have protruding portions 612, 613 forming mutually interdigitating portions, such that when the fiber is advanced through the reactor, it is alternatingly exposed to the first and the second precursor

### Experiments

### Experiment 1 - Al₂O₃ coating on optical fiber.

A standard single-mode fiber with glass fiber diameter 125 µm and polyimide diameter 141 µm was coated with 100 nm Al₂O₃ using ALD (approximately 900 ALD cycles). Al(CH₃)₃ and H₂O was used as ALD precursors.

The Al₂O₃-coated fiber was placed juxtaposed to a reference fiber (without Al₂O₃ layer) in a chamber with a partial pressure of 1 atm H₂ at 21°C for 12 days.

The spectral attenuation was measured before and after the above described treatment and the absorption peak centered at 1240 nm, significant for H₂ in silica, was quantified.
Following the H2-treatment, the uncoated reference fiber showed an increase of 7 dB/km at 1240 nm, whereas the ALD-coated fiber showed an increase of only 1 dB/km.

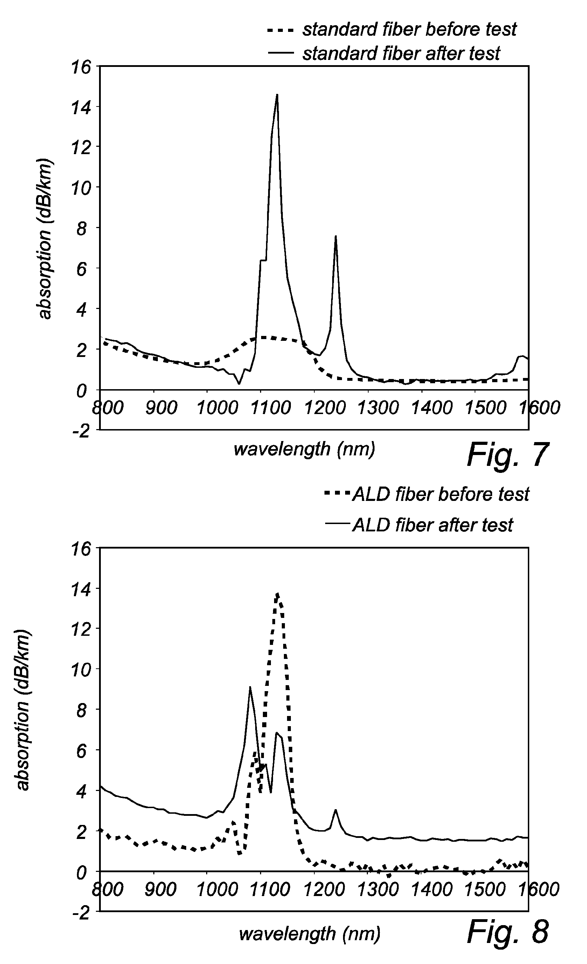

These results are clearly indicated in figures 7 and 8, showing the absorption spectrum (in dB/km) for the fiber before (dashed line) and after (full line) the H₂-exposure. Figure 7 represents the reference fiber and figure 8 represents the Al₂O₃-treated fiber.

This result shows that the ALD-deposited Al₂O₃ provides a significant reduction of H₂-ingression into the glass of the optical fiber, since the peak at 1240 nm is significantly lower in figure 8 than in figure 7.

The absorption band at 1000-1200 nm is due to the cut-off wavelength of the fiber and is not relevant for the present invention.

## Claims

1. A method for the manufacture of an optical fiber (100; 200) with reduced susceptibility for hydrogen induced attenuation, comprising:
- providing an optical fiber comprising a drawn glass fiber (101, 102); and
- arranging, by means of Atomic Layer Deposition, a hydrogen barrier layer (104; 204) comprising at least one sublayer of an inorganic material on said optical fiber.

2. A method according to claim 1, wherein said hydrogen barrier layer (104; 204) is deposited as a homogenous multilayer structure (300) in which at least one sublayer is of said inorganic material.

3. A method according to claim 1, wherein said hydrogen barrier layer is deposited as a heterogeneous multilayer structure (400) in which at least one sublayer is of said inorganic material.

4. A method according to claim 3, wherein said heterogeneous multilayer structure (400) comprises at least a first sublayer (401) of a first inorganic material and at least a second sublayer (402) of a second inorganic material or a polymeric material.

5. A method according to any of the preceding claims, wherein said inorganic material is selected from the group consisting of oxides, nitrides, oxynitrides, sulphides, fluorides, carbides and metals.

6. Method according to any of the preceding claims, wherein said hydrogen barrier layer (104; 204) is deposited to a thickness of from about 0.1 nm to about 5 µm, such as about 1 to about 200 nm, for example about 10 to about 100 nm.

7. Method according to any of the preceding claims, comprising covalently attaching at least a second layer to said hydrogen barrier layer.

8. Method according to claim any of the preceding claims, wherein depositing, by means of Atomic Layer Deposition, said hydrogen barrier layer of an inorganic material comprises:
(a) exposing said optical fiber to a first atmosphere comprising a saturating gaseous composition comprising a first ALD precursor compound reactive with reactive groups on the surface to be coated;
(b) reacting said first precursor compound with said reactive groups on the surface to be coated;
(c) exposing the fiber from step (b) to a second atmosphere comprising a saturating gaseous composition comprising a second precursor compound reactive with reactive groups of the first precursor compound (b);
(d) reacting said second precursor compound with said reactive groups of said first precursor compound; and
(e) optionally repeating steps (a) to (d) one or more additional times.

9. Optical fiber (100), comprising at least a glass fiber (101, 102) and a polymeric coating layer (103) jacketing said glass fiber, further comprising a hydrogen barrier layer (104) comprising at least one sublayer of an inorganic material, arranged on the enveloping surface of said polymeric coating (103).

10. Optical fiber (200), comprising at least a glass fiber (101, 102) and a hydrogen barrier layer (204) comprising at least one sublayer of an inorganic material, arranged on and covalently attached to the enveloping surface of said glass fiber, and optionally a polymeric coating (103) jacketing the enveloping surface of said hydrogen barrier layer (204).

11. Optical fiber according to any of the claims 9 or 10, wherein said inorganic material is selected from the group consisting of oxides, nitrides, oxynitrides, sulphides, fluorides, carbides and metals.

12. Optical fiber according to any of the claims 9 to 11, wherein the thickness of said hydrogen barrier layer (104; 204) is from about 0.1 nm to about 5 µm, such as from about 1 to about 200 nm, for example from about 10 to about 100 nm.

13. Optical fiber according to any of the claims 9 to 12, wherein said hydrogen barrier layer comprises a homogenous multilayer structure (300), in which at least one sublayer is of said inorganic material.

14. A method according to any of the claims 9 to 13, wherein said hydrogen barrier comprises a heterogeneous multilayer structure (400), in which at least one sublayer is of said inorganic material.

15. Reactor for in-line deposition of layers on an optical fiber by means of Atomic Layer Deposition, comprising:
- means for advancing said an optical fiber in relation to said reactor;
- means for exposing said fiber to a first atmosphere comprising a saturating gaseous composition of a first precursor compound, which is reactive to reactive groups on the surface to be coated, arranged in a first position along the advancement direction of said optical fiber; and
- means for exposing said fiber, exposed to said first atmosphere, to a second atmosphere comprising a saturating gaseous composition of a second precursor compound reactive to reactive groups of said first precursor compound, arranged in a second position, located downstream of said first position along said advancement direction.
